# EUROPÄISCHE PATENTSCHRIFT

(11) **EP 0 548 812 B1**
(45) Veröffentlichungstag und Bekanntmachung des Hinweises auf die Patenterteilung: **01.04.1998**
(21) Anmeldenummer: 92121513.3
(22) Anmeldetag: 17.12.1992
(51) Int. Cl.: G05D 19/02, B65G 27/32

(54) **Steuereinrichtung für einen Schwingförderer**
Control unit for a vibratory conveyer
Dispositif de contrôle pour un transporteur à vibrations

(30) Priorität: 20.12.1991 DE 4142398
(43) Veröffentlichungstag der Anmeldung: 30.06.1993
(73) Patentinhaber: REO BORIS VON WOLFF GmbH & Cie., D-10553 Berlin (DE)
(72) Erfinder: Röbel, Friedhelm, W-5657 Haan (DE); van Ekeris, Uwe, W-4010 Hilden (DE); Twellsieck, Friedel, W-5650 Solingen 1 (DE)
(74) Vertreter: von Puttkamer, Nikolaus, Dipl.-Ing. Patentanwälte Haft, von Puttkamer Berngruber, Czybulka

(56) Entgegenhaltungen:
- EP-A- 0 453 241
- WO-A-86/02058
- DE-A- 3 644 811
- US-A- 3 864 618
- PATENT ABSTRACTS OF JAPAN vol. 7, no. 217 (M-245)(1362) 27. September 1983 & JP-A-58 113 014

## Beschreibung

Die Erfindung betrifft eine Steuereinrichtung für einen durch eine Magneteinrichtung betriebenen Schwingförderer nach dem Oberbegriff des Patentanspruches 1.

Zum Betrieb von Schwingförderern in der Form von Magnetschwingrinnen und Rundförderern werden in der Praxis neben Stelltransformatoren überwiegend Thyristorsteuerungen eingesetzt. Die Steuerung der Geschwindigkeit des Fördergutes erfolgt dabei durch Verändern der Spannung von der Magneteinrichtung des Schwingförderers bzw. durch Phasenanschnitt der treibenden Netzspannung.

Die Schwingfrequenz des Schwingförderers ist mit 3000 Schwinqungen pro Minute bei Halbwellenbetrieb bzw. 6000 Schwingungen pro Minute bei Vollwellenbetrieb an die Netzfrequenz von 50 Hz gebunden. Bei einer Netzfrequenz von 60 Hz beträgt die Schwingfrequenz entsprechend 3600 Schwingungen pro Minute bei Halbwellenbetrieb bzw. 7200 Schwingungen pro Minute bei Vollwellenbetrieb.

Der Schwingförderer stellt aus physikalischer Sicht in erster Näherung ein schwingfähiges Feder/Masse-System zweiter Ordnung mit geringer Dämpfung dar. Erzeugt also ein ausgeprägtes Resonanzverhalten. Damit beim Betrieb eine ausreichende Schwingweite und damit eine ausreichende Förderleistung erreicht wird, muß der Schwingförderer in der Nähe seiner Resonanzfrequenz betrieben werden. Auf der anderen Seite zeigt aber ein in Eigenresonanz arbeitender Schwingförderer bei konstanter Eingangsspannung eine erhebliche Abhängigkeit der Schwingweite von der mechanischen Belastung. Dadurch wird ein konstanter Materialfluß unmöglich.

In der Praxis wird bei der Verwendung der oben angeführten Schwingsteuerungen in der Auslegung der Eigenresonanzfrequenz der Schwingförderers ein Kompromiß zwischen ausreichender Förderleistung und stabiler Schwingweite unter wechselnder Last gesucht. Bei 50 Hz Netzfrequenz und Halbwellenbetrieb arbeitet der Förderer beispielsweise mit einer Eigenfrequenz von etwa 55 Hz mit zufriedenstellender Stabilität. Die geringe Abhängigkeit der Förderleistung von der Belastung wird jedoch über einen erhöhten Leistungsbedarf erkauft. Genauer gesagt wird die Leistungaufnahme etwa verdoppelt.

Als weiterer Nachteil der Frequenzabweichung von der Resonanzfrequenz, die im zuvor angegebenen Beispiel 5 Hz bzw. 10% beträgt, ist der rauhere Lauf (Anregung auf Nebenresonanzen) des Schwingförderers zu nennen, der die Auslegung von Sortiereinrichtung (auf sogenannten Schikanen) erschwert.

Die Anpassung der Resonanzfrequenz des Schwingförderers an die Frequenz der treibenden Spannung muß an jedem einzelnen Exemplar durch Wahl der Schwingfedern mit geeigneter Federkonstante erfolgen. Zu diesem Zweck werden teilweise die einzelnen Federelemente anhand von Durchbiegungsmessungen vorsortiert. In vielen Fällen kann die Eigenresonanzfrequenz nur durch Probieren ermittelt werden. In jedem Fall erfordert das Abstimmen der Schwingförderer einen erheblichen Arbeits- und Zeitaufwand, insbesondere dann, wenn durch Einbau von verschiedenen Sortiereinrichtungen auch die Frequenz beeinflussende Masse des Schwingförderers individuell angepaßt werden muß.

Aus der WO-A-86/02058 geht eine Steuereinrichtung für einen durch eine Magneteinrichtung betriebenen Schwingförderer mit den Merkmalen des Oberbegriffs des Patentanspruchs 1 hervor. Ein Problem einer derartigen Steuereinrichtung besteht darin, daß nach jeder Veränderung am Schwingförderer, beispielsweise nach dem Austausch von Komponenten des Schwingförderers, durch Betätigen eines Potentiometers die Frequenz in die Nähe der Resonanzfrequenz eingestellt werden muß.

Aus der DE-A-36 44 811 geht ein Schwingförderer hervor, der in seiner Steuerschaltung eine Startschaltung aufweist, mit der kurze Anregungsimpulse für den Anregungsmagneten in einem solchen zeitlichen Abstand erzeugt werden, daß sich jeweils eine freie Schwingung des Systems ausbilden kann, deren Grundperiode mit einem Nulldurchgangsdetektor feststellbar und als ungefährer Wert der Resonanzfrequenz in die Regelung zur Steuerung des Schwingförderers in der Resonanzfrequenz eingegeben wird.

Aus der US-A-3 864 618 ist es bekannt, die Eigenresonanzfrequenz eines Schwingförderers dadurch einzustellen, daß mit der Hilfe eines Sensors die Frequenz und die Phase der Schwingung des Schwingförderers ermittelt werden. Ein entsprechendes Signal steuert einen spannungsgesteuerten Oszillator, der die Anregungsspule treibt.

Bei den genannten, vorbekannten Steuereinrichtung muß eine Abstimmung auf die Eigenresonanzfrequenz bei jeder Inbetriebnahme erfolgen.

Die Aufgabe der vorliegenden Erfindung besteht darin, eine Steuereinrichtung für einen durch eine Magneteinrichtung in Eigenresonanz zu betreibenden, einen geringen Leistungsbedarf erfordernden Schwingförderer so zu schaffen, daß eine einfache und wirtschaftliche Erstinbetriebnahme selbst bei beliebigem Austausch von vorliegenden Steuereinrichtungen und Schwingförderern untereinander möglich ist.

Diese Aufgabe wird durch eine Steuereinrichtung mit den Merkmalen des Patenanspruchs 1 gelöst.

Der wesentliche Vorteil der Erfindung besteht darin, daß mit der vorliegenden Steuereinrichtung eine einfache und wirtschaftliche Erstinbetriebnahme von Schwingförderern möglich ist. Vorteilhafterweise ermöglicht die vorliegende Steuerung aufgrund der Schwingweitenrückführung den Betrieb des Schwingförderers in Eigenresonanz. Dadurch ergibt sich eine wesentliche Verringerung des Leistungsbedarfes. Außerdem kann dadurch ein ruhiger, verzerrungsarmer Schwingverlauf bei konstanter und geregelter Fördergeschwindigkeit erfolgen.

Da bei der vorliegenden Steuerung eine automatische Frequenzabstimmung auf die Eigenresonanz des Schwingförderers möglich ist, sind Feinabstimmungsarbeiten der Fördereigenfrequenz auf mechanischem Weg überflüssig. Außerdem können höhere Fertigungstoleranzen der Federsysteme zugelassen werden.

Die automatische Frequenzabstimmung der Schwingsteuerung auf die Eigenfrequenz des Schwingförderes ermöglicht vorteilhafterweise den beliebigen Austausch von vorliegenden Steuereinrichtungen und Schwingförderern untereinander und versetzt auch fachfremdes Personal in die Lage, die Anpassung der Steuereinrichtung an den Schwingförderer selbst vorzunehmen.

Weitere vorteilhafte Ausgestaltungen der Erfindung gehen aus Unteransprüchen hervor.

Im folgenden werden die Erfindung und deren Ausgestaltungen im Zusammenhang mit den Figuren näher erläutert. Es zeigen:
Fig. 1 das Blockschaltbild einer Ausführungsform der erfindungsgemäßen Steuereinrichtung und
Fig. 2A - 2C Diagramme zur Erläuterung der Funktion der vorliegenden Steuerung.

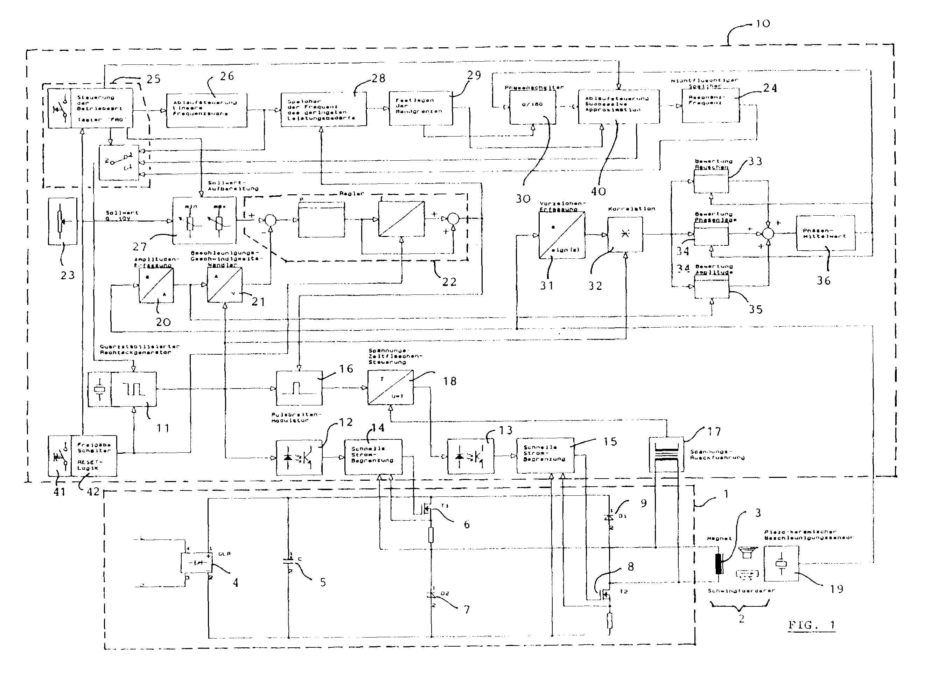

In der Figur 1 ist ein Leistungsteil, das die Magneteinrichtung 3 des Schwingförders 2 antreibt, mit 1 bezeichnet. Im Leistungsteil 1 formt eine Gleichrichtereinrichtung 4, bei der es sich vorzugsweise um eine ungesteuerte, netzgeführte Brückengleichrichterschaltung handelt, den eingangsseitig anliegenden Wechselstrom in einen Gleichstrom um. Der Gleichrichtereinrichtung 4 ist ein Ladekondensator 5 als Gleichstromzwischenkreis parallel geschaltet. Ausgangsseitig ist das Leistungsteil 1 mit der Magneteinrichtung 3 über eine halbgesteuerte Brücke zur Formung von Wechselspannungs/Gleichstrom-Impulsen verbunden. Dabei weist die Brücke in einem ersten, parallel zum Ladekondensator 5 angeordneten Zweig einen ersten Leistungstransistor 6 und eine Diode 7 und in einem zweiten, ebenfalls parallel zum Ladekondensator 5 angeordneten Zweig einen zweiten Leistungstransistor 8 und eine zweite Diode 9 jeweils in Reihenschaltung auf. Diese Anordnung hat zwei entscheidende Vorteile gegenüber einer herkömmlichen Phasenanschnittssteuerung. Zum einen sind Ausgangs impulse mit in weiten Grenzen verstellbarer Frequenz durch Ansteuerung der Transistoren 6 und 8 erzeugbar, wie dies später näher erläutert werden wird. Die Schwingfrequenz des Schwingförderers 2 ist daher nicht an die Netzfrequenz gebunden. Außerdem verringert sich die Stromaufnahme des Leistungsteiles 1 aus dem Netz durch Rückspeisung in den Ladekondensator 5 erheblich. Sie beträgt etwa ein Drittel bis ein Viertel des Stromes durch die Magneteinrichtung 3 des Schwingförderers 2.

Die Magneteinrichtung 3 des Schwingförderers 2 stellt aus elektrischer Sicht eine induktive Last mit einem nur relativ geringem ohmschen Anteil dar, der sich aus Kupfer- und Eisenverlusten der Spule und dem Leistungsbedarf der Mechanik des Schwingförderers 2 und der Reibung des Fördergutes zusammensetzt. Der daraus resultierende hohe Blindleistungsbedarf der Spule der Magneteinrichtung 3 wird vollständig aus dem Gleichstromzwischenkreis 5 geliefert. Die dem Blindanteil entsprechende Energie pendelt zwischen dem Ladekondensator des Gleichstromzwischenkreises 5 und der Magneteinrichtung 3 des Schwingförderers 2 hin und her, wobei die Frequenz und die Amplitude in der später beschriebenen Weise von der Steuereinrichtung vorgegeben werden. Das Netz muß dabei nur die Verluste der Spule der Magneteinrichtung 3 und die mechanische Wirkleistung übernehmen, indem es den entsprechenden Nachladestrom für den Gleichstromzwischenkreis 5 liefert.

Da die Eingangsschaltung des Leistungsteiles 1 aus einem passiven Brückengleichrichter 4 besteht, findet das Nachladen des Gleichstromzwischenkreises 5 in Form von relativ schmalen Stromimpulsen statt, wodurch das Netz mit einer Verzerrungsblindleistung belastet wird. Diese Verzerrungsblindleistung liegt auch ohne jede Zusatzmaßnahme erheblich unter dem Blindleistungsbedarf der Magneteinrichtung 3, wodurch die erwähnte Stromeinsparung zu erklären ist. Durch Einsatz einer z.B. vor die Gleichrichtereinrichtung 4 geschalteten Ladedrossel läßt sie sich weiter reduzieren.

Im folgenden wird nun beschrieben, wie die Leistungstransistoren 6 und 8 durch die Steuereinrichtung 10 angesteuert werden. Die Steuereinrichtung 10 weist einen Rechteckgenerator 11 auf, bei dem es sich vorzugsweise um einen Quarzoszillator mit einem nachgeschalteten Ringzähler variabler Schrittzahl im Bereich von 35 bis 140 Hz in Stufen von 0,1 Hz einstellbar handelt. Die Reproduzierbarkeit der Zeitkonstante der Frequenz entspricht dabei der Güte des Quarzes. Nach dem Einschalten durch Betätigen des Schalters 41 sperrt zunächst die RESET-Logik die Impulse des Rechteckgenerators und setzt den Integrator des später näher erläuterten PJ-Reglers 22 auf null. Damit wird die Ansteuerung des Leistungsteiles 1 solange verhindert, bis die internen Versorgungsspannungen ihren Nennwert erreicht haben. Danach schaltet die Logik 42 die Steuerung in den Normalbetrieb, in dem ein später näher erläuterter Betriebsartenschalter 25 den Wert der Resonanzfrequenz des Schwingförderers 2 aus einem nichtflüchtigen Speicher 24 in den Rechteckgenerator 11 übermittelt (Weg 1-2 im Schalter 25), der die Frequenz zur Ansteuerung des Leistungsteiles erzeugt.

Der Steueranschluß jedes Leistungstransistors 6 bzw. 8, bei dem es sich vorzugsweise um einen Feldeffekttransistor handelt, ist zweckmäßigerweise über eine galvanische Trennung 12 bzw. 13 mit dem Ausgang des Rechteckgenerators 11 verbunden. Um eine Überlastung der Leistungstransistoren 6 bzw. 8 zu vermeiden, ist jeder galvanischen Trennung 12 bzw. 13 ein Strombegrenzer 14 bzw. 15 für eine schnelle Strombegrenzung nachgeschaltet.

Der Leistungstransistor 6 erhält seine Steuerimpulse direkt vom Rechteckgenerator 11 mit einem Impuls/Pause-Verhältnis von 1:1, wohingegen der Leistungstransistor 8 über einen Pulsbreitenmodulator 16 angesteuert wird, der eingangsseitig mit dem Rechteckgenerator 11 und ausgangsseitig mit der galvanischen Trennung 13 verbunden ist. Um an der Magneteinrichtung 3 Ausgangsimpulse mit jeweils konstanten Spannungs-Zeit-Flächen zu erhalten, ist eine Spannungsrückführung 17 vorgesehen, die ein der Ausgangsspannung entsprechendes Steuersignal einer Spannungs-Zeit-Flächen-Steuerung 18 als Steuersignal zuführt, die dem Pulsbreitenmodulator 16 nachgeschaltet ist. Durch diese Steuerung werden in der Magneteinrichtung 3 des Schwingförderers 2 konstante Stromamplituden auch bei schwankender Netzspannung bzw. welliger Spannung am Gleichrichterzwischenkreis 5 erzeugt.

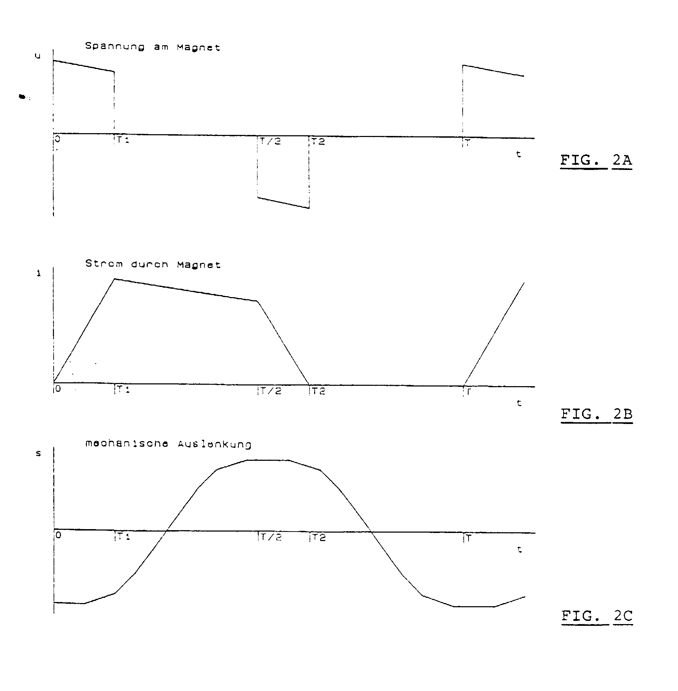

Im folgenden wird im Zusammenhang mit der Figur 2A bis 2D die frequenzvariable Schwingsteuerung des Schwingförderers 2 näher erläutert. Innerhalb jeder Periode mit der Dauer T werden die Leistungstransistoren 6 und 8 nach dem folgenden Schema angesteuert. Zu Beginn der Periode, im Zeitraum t = 0 bis t = T1 werden die beiden Leistungstransistoren 6 und 8 angesteuert. Dadurch wird auf die zuvor strom- und spannungslose Magneteinrichtung 3 des Schwingförderers 2 die Spannung des Gleichstromzwischenkreises 5 (etwa 325 V bei 230 V Netzspannung) aufgeschaltet. Da die Magneteinrichtung 3, wie oben diskutiert, im wesentlichen eine Induktivität darstellt, baut sich nun nach der Formel 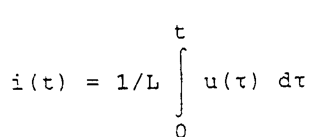 ein Strom mit dem Scheitelwert 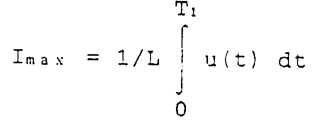 mit einer relativ großen Steilheit (Fig. 2B) auf. Die Spannung des Gleichstromzwischenkreises 5 bricht im gleichen Zeitraum entsprechend der entnommenen Ladung ein. Gleichzeitig liefert das Netz einen Nachladestrom.

Zum Zeitpunkt T1 wird einer der beiden Transistoren abgeschaltet. Im Zeitraum T1 bis T/2 fließt der Spulenstrom durch den jetzt aktiven Freilaufzweig über die entsprechende Diode 7 bzw. 8 weiter, wobei die Spannung an der Spule der Magneteinrichtung 3 leicht negativ ist (Spannungsabfall an den Dioden im Voltbereich). Aufgrund der an der Spule der Magneteinrichtung 3 anliegenden Spannung, den Verlusten in der Spule und dem mechanischen Leistungsbedarf wird der Strom vom Maximalwert Imax mit relativ geringer Steilheit auf einen kleineren Wert abgebaut (Figur 2B).

Zum Zeitpunkt T/2 wird auch der zweite Transistor abgeschaltet. Damit ist der Freilaufzweig unterbrochen, der Spulenstrom muß jetzt zurück in den Gleichstromzwischenkreis 5 fließen, wodurch die Spannung des Gleichstromzwischenkreises 5 mit umgekehrter Polarität an der Spule der Magneteinrichtung 3 anliegt. Der Spulenstrom wird dann mit einer relativ großen Steilheit abgebaut. Zum Zeitpunkt T2 erreichen Strom und Spannung an der Spule der Magneteinrichtung 3 den Wert 0. Im Zeitraum T/2 bis T2 steigt die Spannung am Gleichstromzwischenkreis 5 entsprechend der einfließenden Ladung an.

Im letzten Zeitraum T2 bis T der Periode T bleibt die Magneteinrichtung 3 spannungs- und stromlos.

Der zeitliche Verlauf der Stromschwingung ist also trapezförmig, wobei die mittlere Stromflußzeit etwa der halben Periodendauer entspricht. Durch Änderung der Pulszeit T1 ist die Steuerung in der Lage, die Stromamplitude Imax von null bis zum höchstzulässigen Strom des Schwingförderers 2 zu stellen. Die die Höhe der Ausgangsspannung über die Spannungsrückführung 17 erfassende Spannungs-Zeit-Flächen-Steuerung 18 sorgt dabei für jeweils konstante Spannungs-Zeit-Flächen der treibenden Spannungsimpulse im Bereich von T = 0 bis T1 (Figur 2A) und macht somit die Stromamplitude unabhängig von der Höhe der Spannung des Gleichstromzwischenkreises 5 (Welligkeit) und damit auch unabhängig von Netzspannungsschwankungen.

Der Schwingförderer 2 wird durch die Stromimpulse in seiner Magneteinrichtung 3 in mechanische Schwingungen (Figur 2C) versetzt, wobei sich die Schwingweite in Abhängigkeit von der Stromstärke, der Frequenz, der Bauart des Schwingförderers 2 und der Belastung einstellt.

Mit dem Schwingförderer 2 ist ein Beschleunigungssensor 19, bei dem es sich vorzugsweise um einen piezokeramischen Beschleunigersensor handelt, mechanisch verbunden. Er übermittelt den Momentanwert der Beschleunigung an eine Amplituden-Erfassungseinrichtung 20, die vorzugsweise die Form eines auf den Spitzenwert messenden Spitzenwert-Gleichrichters aufweist, dessen Ausgangssignal daher dem Spitzenwert und somit der Schwingungsweite entspricht.

Die Amplitude der Beschleunigung wird mit der Hilfe der Frequenz des Rechteckgenerators 11 in die Amplitude der Fördergeschwindigkeit durch den Beschleunigungs/Geschwindigkeits-Wandler 21, dem die Rechteckimpulse aus dem Rechteckgenerator 11 und das Ausgangssignal der Amplituden-Erfassungseinrichtung 20 zugeführt werden, umgewandelt. Diese Amplitude der Fördergeschwindigkeit, die am Ausgang des Wandlers 21 anliegt, stellt den Istwert eines PI-Reglers 22 dar. Als Sollwert wird dem PI-Regler 22 eine Spannung, insbesondere von 0 bis 10 V, die vorzugsweise mit einem Potentiometer 23 von Hand eingestellt wird, zugeführt. Der Ausgang PI-Reglers 22 ist mit dem Steuereingang des Pulsbreiten-Modulators 16 verbunden, so daß in Abhängigkeit von der Abweichung zwischen dem Soll- und Istwert am Eingang des PI-Reglers 22 über die Einstellung der Impulsbreite des Steuerimpulses am Steueranschluß des Leistungstransistors 8 und die durch den Beschleunigungssensor 19 über die Amplituden-Erfassungseinrichtung 20 und den Wandler 21 als Istwert der Fördergeschwindigkeit, die Fördergeschwindigkeit auf den vorgegebenen Sollwert eingestellt wird.

Bei der Erstinbetriebnahme des Schwingförderers 2 erfolgt eine automatische Frequenzabstimmung der Schwingsteuerung auf die Eigenresonanzfrequenz des Schwingförderers 2 mit einer Genauigkeit von etwa 0,1 Hz. Im folgenden wird die hierfür vorgesehene Schaltung näher erläutert. Die ermittelte Eigenresonanzfrequenz des Schwingförderers 2 wird in dem nichtflüchtigen Speicher 24 für die Resonanzfrequenz abgelegt. Der Betrieb des Schwingförders 2 kann dann bei dieser Resonanzfrequenz oder bei einer genau definierten, einstellbaren Frequenz relativ zur Resonanzfrequenz erfolgen. Da die einmal ermittelte Eigenresonanzfrequenz des Schwingförderers 2 im Speicher 24 abgespeichert wird, muß die Frequenzabstimmung, für die ein Zeitbedarf von etwa 0,5 bis 2 Minuten erforderlich ist, vorteilhafterweise nur bei der ersten Inbetriebnahme oder nach Austausch des Schwingförderers oder der Steuerung durchgeführt werden.

Die Bestimmung der Eigenresonanzfrequenz des Schwingförderers 2 erfolgt in zwei Schritten. Im ersten Schritt wird ein zu durchsuchender Frequenzbereich, der beispielsweise von 35 Hz bis 140 Hz reicht, linear durchfahren. Hierzu wird zunächst die Steuerung durch Betätigen des Betriebsartenschalters 25 vom Normalbetrieb in den Betrieb der automatischen Frequenzabstimmung gesetzt. Von einer Ablaufsteuerung 26 wird zunächst der zu durchsuchende Frequenzbereich (35 bis 140 Hz) linear durchfahren. Hierzu steuert die Ablaufsteuerung 26 über die Verbindung 2-3 des Betriebsartenschalters den Rechteckgenerator 11 entsprechend an. Dabei stellt der Proportional-Integral-Regler 22 die Fördergeschwindigkeit auf einen intern vorgegebenen Sollwert ein. Hierzu wird in der Betriebsart der automatischen Frequenzabstimmung das Potentiometer 23 für den Sollwert wirkungslos geschaltet. Der genannte intern vorgegebene Sollwert wird über die Sollwert-Aufbereitung 27 vorgegeben. Die Ausgangsgröße des Reglers 22 stellt ein relatives Maß für den Leistungsbedarf des Förderers 2 in Abhängigkeit von der Frequenz dar.

Während der linearen Suche wird die Frequenz des geringsten Leistungsbedarfes des Schwingförderers 2 ermittelt. Hierbei stellt der Regler 22 durch Ansteuerung des Pulsbreitenmodulators 16 für jede Frequenz die Differenz zwischen dem Istwert am Ausgang des Beschleunigungs/Geschwindigkeitswandlers 21 und der Sollwert-Aufbereitung 27 auf Null. In einem Speicher 28 für die Frequenz des geringsten Leistungsbedarfes wird die Frequenz des geringsten Leistungsbedarfes durch fortwährendes Vergleichen der Ausgangssignale am Regler 22 ermittelt.

Aufgrund mechanischer Störungen ist die in dieser Weise ermittelte Frequenz des geringsten Leistungsbedarfes relativ ungenau ( 20%). Zur genauen Analyse kommt nun ein Frequenzverfahren der sukzessiven Approximation zum Einsatz.

Zu diesem Zweck werden zunächst durch die Schaltung 29 zum Festlegen der Bandgrenzen die Bandgrenzen des noch zu durchsuchenden Frequenzbereiches ermittelt, der die Resonanzfrequenz enthält. Die Bandbreite wird dabei schrittweise solange vergrößert, bis die Phasenverschiebung zwischen dem Strom durch die Magneteinrichtung 3 des Schwingförderers 2 und der mechanischen Schwingung des Schwingförderers 2 an der unteren Bandgrenze in Bezug auf die der oberen Bandgrenze einen Unterschied von etwa 180° aufweist. Dadurch wird gleichzeitig der Phasenbezug, der durch die mechanische Befestigung des Beschleunigungssensors 19 in Bezug auf die Wirkungsrichtung der Magneteinrichtung 3 und die mechanische Konstruktion des Schwingförderers 2 festgelegt ist, ermittelt und in dem Phasenschalter 30 abgespeichert.

Das auf diese Weise vorbestimmte und ermittelte Frequenzband wird jetzt von Iterationsschritt zu Iterationsschritt in immer kleinere Abschnitte unterteilt, bis die Resonanzfrequenz mit einer Genauigkeit von 0,1 Hz ermittelt ist. Hierbei wird wie folgt vorgegangen. In jedem Iterationsschritt wird zunächst festgestellt, ob die momentan eingestellte Frequenz unterhalb oder oberhalb der im Speicher 24 abgespeicherten Eigenresonanzfrequenz der Schwingförderers 2 liegt. Als Entscheidungskriterium dient dabei die Phasenlage der treibenden Stromschwingung durch die Magneteinrichtung 3 gegenüber der mechanischen Schwingung des Schwingförderers 2. Beträgt die Phasenverschiebung 0°, so liegt die Momentanfrequenz unter der Resonanzfrequenz. Beträgt die Phasenverschiebung 180°, liegt die Momentanfrequenz oberhalb der Resonanzfrequenz. Bei 90° Phasenverschiebung zwischen der Stromschwingung und der mechanischen Schwingung arbeitet der Schwingförderer 2 in Eigenresonanz (erzwungene Schwingung eines Systems zweiter Ordnung mit geringer Dämpfung).

Die Phasenverschiebung zwischen dem Strom durch die Magneteinrichtung 3 und der mechanischen Schwingung des Schwingförderers 2 wird nach dem Korrelationsverfahren gemessen. Zu diesem Zweck wird das Vorzeichen der Momentanbeschleunigung mit dem Signal des Rechteckgenerators multipliziert. Hierfür wird das Ausgangssignal des Beschleunigungssensors 19 auf den Eingang einer Schaltung 31 zur Vorzeichenerfassung gegeben. Das Ausgangssignal der Schaltung 31 wird auf eine Korrelationsschaltung 32 gegeben, der als weiteres Eingangssignal das Ausgangssignal des Rechteckgenerators 11 zugeführt wird. Die Korrelationsschaltung 32 ermittelt das Impuls/Pause-Verhältnis der Ergebnisfunktion. Es wird beispielsweise davon ausgegangen, daß beide der Korrelationsschaltung zugeführten Rechteckimpulse die Zustände +1 und -1 aufweisen können. Durch Multiplikation ergibt sich dann bei einer Phasenverschiebung von 0° für jede Halbwelle +1, bei einer Phasenverschiebung von 180° für jede Halbwelle -1 und bei einer Phasenverschiebung von 90° viertelwellenweise alternierend -1 und +1. Das Ausgangssignal der Korrelationsschaltung 32 wird an den Phasenschalter 30 angelegt.

Da das künstlich erzeugte Signal aus dem Rechteckgenerator 11 hunderprozentig sauber ist, das Signal aus dem Beschleunigungssensor 19, das dem momentanen Vorzeichen der Beschleunigung entspricht, dagegen aber mit allen Oberwellen und Rauschsignalen behaftet ist, die durch das Fördergut beeinflußt sein können, können während der +1 Phase (-1 Phase) des Ausgangssignales des Beschleunigungssensors 19 -1 Impulse (+1 Impulse) entstehen. Dies aber führt bei einer Phasenverschiebung des Ausgangssignales und des Rechteckimpulses von 0° zu einem Fehler, der das Ergebnis der Korrelation in Richtung 90° verschiebt, weil dann die Deckung der beiden Impulszüge nicht mehr richtig vorliegt. Ebenso verschiebt ein solcher Fehler bei einer Phasenverschiebung von 180° das Ergebnis in Richtung 90°. Jeder Fehler verschiebt also das Ergebnis in Richtung 90°. Das bedeutet, daß der Fehler immer in Richtung auf das Entscheidungskriterium verschoben wird.

In jedem Iterationsschritt wird über mehrere Messungen gemittet, wobei zur Beschleunigung jede Einzelmessung mit einem Gütekriterium bewertet werden kann, damit nicht das Ende des Einschwingvorganges abgewartet werden muß. Das Gütekriterium orientiert sich an der Amplitude und an der Phasenlage des Meßsignales sowie an der Abweichung vom Mittelwert (Rauschen). Hierfür sind eine Schaltung 33 zur Bewertung des Rauschens, eine Schaltung 34 zur Bewertung der Phasenlage und eine Schaltung 35 zur Bewertung der Amplitude vorgesehen, die jeweils das Ausgangssignal der Korrelationsschaltung 32 aufnehmen. Die jeweilige Bewertung der Zuverlässigkeit des Ausgangssignales erfolgt durch eine Vergabe von Gütepunkten aufgrund von in den Schaltungen 33, 34 und 35 abgespeicherten Informationen, die eine Zuordnung der jeweils gemessenen Ausgangssignale zu diesen Gütepunkten ermöglichen. Wenn z.B. die Amplitude des vom Beschleunigungssensor 19 zurückgeführten Signales relativ klein ist, wird das Meßergebnis mit großer Wahrscheinlichkeit schlecht sein, so daß ein entsprechender Gütepunkt vergeben und aufaddiert wird. Das Ausgangssignal der Amplituden-Erfassungseinrichtung 20 wird zu der zuvor genannten Bewertung der Schaltung 35 zugeführt. Entsprechend wird die Phasenlage dahingehend bewertet, daß die Ermittlung von "90°" durch die Korrelationsschaltung, was dem Entscheidungskriterium entspricht, bei dem die Anforderungen höher zu stellen sind, als wenn eine Phasenlage von z.B. 10° ermittelt wird, durch die Vergabe eines entsprechenden Gütepunktes entsprechend schlecht bewertet wird. Die Bewertung des Rauschens bezieht den laufend gebildeten Mittelwert auf die jeweilige Einzelmessung und benutzt die Differenz dazu, zu ermitteln, wie stark der Einzelwert um den Mittelwert schwankt. Stark schwankende Meßergebnisse werden durch die Vergabe entsprechender Gütepunkte schlechter bewertet als weniger stark schwankende Werte. Zu diesem Zweck wird das Ausgangssignal der Schaltung 36 zur Bildung des Mittelwertes zur Schaltung 39 zurückgeführt. Die durch die Schaltungen 33 bis 35 vorgegebenen Gütepunkte werden summiert und der Schaltung 36 zur Bildung des Phasenmittelwertes zugeführt, deren Ausgang mit dem Phasenschalter 30 verbunden ist. Die Messung wird dann abgebrochen, wenn das nach den drei Kriterien durch die Schaltungen 33, 34 und 35 bewertete Ausgangssignal der Korrelationsschaltung 32 vorgegebenen Anforderungen entspricht, d.h. eine vorgegebene Summe an Gütepunkten erreicht wird. Der dann am Ausgang der Schaltung 36 ermittelte Phasenmittelwert wird dann an den Phasenschalter 30 angelegt. In dem nächsten Iterationsschritt kann dann auf eine neue Frequenz eingestellt werden.

Die Meßdauer in jedem Iterationsschritt richtet sich nach der Güte des Beschleunigungssignales. Jede Messung stützt sich zur Verringerung des Einflußes von Nebenresonanzen (lokale Maxima) vorzugsweise auf ein (relativ schmales) Frequenzband mit einer von der Iterationstiefe abhängigen Breite und nicht nur auf eine einzelne Frequenz.

Der Phasenschalter kompensiert vorzugsweise eine zusätzliche Phasendrehung von 180° (Vorzeichen der Bewegungsrichtung), die in Abhängigkeit von der Montage des Beschleunigungssensors 19 an den Schwingförderer 2 auftreten kann. Genauer gesagt wird, wie oben bereits erläutert durch den Speicher 28 für die Frequenz des geringsten Leistungsbedarfes die etwaige Lage der Resonanzfrequenz ermittelt. Es kann dann durch die Schaltung 29 zum Festlegen der Bandgrenzen eine Frequenz unterhalb bzw. oberhalb der Resonanzfrequenz angefahren werden. Bei einer Frequenz unter der Resonanzfrequenz liefert der Beschleunigungssensor irgend ein Vorzeichen (z.B. -1). Dies bedeutet, daß der Schaltung 29 bekannt ist, welches Vorzeichen zu welcher Frequenz (unterhalb oder oberhalb der Resonanzfrequenz) gehört. Diese Zuordnung wird im Phasenschalter 30 abgespeichert. Wenn nun der aus der Schaltung 36 ermittelte Phasenmittelwert dieser Zuordnung nicht entspricht, zieht der Phasenschalter 30 von diesem Phasenmittelwert einfach 180° ab.

## Patentansprüche

1. Steuereinrichtung für einen durch eine Magneteinrichtung (3) in Eigenresonanz zu betreibenden Schwingförderer (2) mit einem der Magneteinrichtung (3) vorgeschalteten Leistungsteil (1) und mit einem die Schwingung des Schwingförderers (2) erfassenden Sensor (19), der ein der Schwingung des Schwingförderers (2) entsprechendes Signal erzeugt und einer Steuerschaltung (10) als Istwert zuführt und diesen mit einem durch eine Vorgabeeinrichtung (23) vorgegebenen Sollwert für die Schwingung vergleicht, wobei das Leistungsteil (1) in Abhängigkeit von der beim Sollwert/Istwert-Vergleich ermittelten Abweichung die Magneteinrichtung (3) des Schwingförderers (2) ansteuert, dadurch gekennzeichnet, daß zur Ermittlung der Eigenresonanzfrequenz des Schwingförderers (2) bei einer Erstinbetriebnahme ein Frequenzbereich, in dem die Resonanzfrequenz zu erwarten ist, durchfahren und dabei die Frequenz des geringsten Leistungsbedarfes dadurch als Eigenresonanzfrequenz des Schwingförderers (2) ermittelt wird, daß für jede Frequenz die Differenz zwischen dem Sollwert und dem Istwert ermittelt und die der kleinsten Differenz entsprechende Frequenz als die Eigenresonanzfrequenz bestimmt und in einem nichtflüchtigen Speicher (24) für den nachfolgenden Betrieb des Schwingförderers (2) gespeichert wird.

2. Steuereinrichtung nach Anspruch 1, dadurch gekennzeichnet, daß als Istwert die Amplitude der Fördergeschwindigkeit genutzt wird.

3. Steuereinrichtung nach Anspruch 1 oder 2, dadurch gekennzeichnet, daß das Leistungsteil (1) eine halbgesteuerte Brückenschaltung und dazu parallel einen Ladekondensator (5) aufweist, daß ein erster Zweig parallel zum Ladekondensator (5) geschaltet ist und einen ersten Steuerschalter (6) und eine dazu in Reihe geschaltete erste Diode (7) aufweist, daß ein zweiter Zweig parallel zum Ladekondensator (5) geschaltet ist und einen zweiten Steuerschalter (8) und eine dazu in Reihe geschaltete zweite Diode (9) aufweist, daß die Steuerschaltung (10) einen Rechteckgenerator (11) aufweist, dessen im Normalbetrieb mit der Eigenresonanzfrequenz erzeugte Rechteckimpulse dem Steueranschluß des ersten Steuerschalters (6) direkt und über einen Pulsbreitenmodulator (16) dem Steueranschluß des zweiten Steuerschalters (8) zugeführt werden und daß der Pulsbreitenmodulator (16) die Impulsbreite der Rechteckimpulse des Rechteckgenerators (11) in Abhängigkeit von der von einem Regler (22) ermittelten Differenz verändert.

4. Steuereinrichtung nach Anspruch 3, dadurch gekennzeichnet, daß zwischen den Pulsbreitenmodulator (16) und den zweiten Steuerschalter (8) eine Spannungs-Zeitflächen-Steuerung (18) geschaltet ist, der von einer Spannungsrückführung (17) ein die Ausgangsspannung des Leistungsteiles (1) verkörperndes Steuersignal zugeführt wird, um an der Magneteinrichtung (3) Impulse konstanter Spannungs-Zeit-Flächen zu erhalten.

5. Steuereinrichtung nach Anspruch 3 oder 4, dadurch gekennzeichnet, daß das Signal des Beschleunigungssensors (19) einer Amplituden-Erfassungseinrichtung (20) zugeführt wird, die aus dem Momentanwert der Beschleunigung ein Ausgangssignal erzeugt, das der maximalen Amplitude der Beschleunigung entspricht und an einen Beschleunigungs-/Geschwindigkeitswandler (21) angelegt wird, dem auch die Rechteckimpulse des Rechteckgenerators (11) zugeführt werden und der ein der Amplitude der Beschleunigung entsprechendes Signal als Istwert erzeugt.

6. Steuereinrichtung nach einem der Ansprüche 3 bis 5, dadurch gekennzeichnet, daß eine die Frequenz des Rechteckgenerators (11) zum Durchfahren des Frequenzbereiches kontinuierlich verändernde Ablaufsteuerung (26) vorgesehen ist, der ein weiterer Speicher (28) der Frequenz des geringsten Leistungsbedarfes nachgeschaltet ist, der beim Durchfahren des Frequenzbereiches die Ausgangssignale des Reglers (22) aufnimmt und fortwährend miteinander vergleicht, und so den geringsten Leistungsbedarf ermittelt und die dieser zugeordnete Frequenz als die bestimmte Eigenresonanzfrequenz speichert.

7. Steuereinrichtung nach Anspruch 6, dadurch gekennzeichnet, daß dem weiteren Speicher (28) für die bestimmte Eigenresonanzfrequenz eine Schaltung (29) zum Festlegen von Bandgrenzen nachgeschaltet ist, die zur genaueren Ermittlung der Eigenresonanzfrequenz des Schwingförderers (2) die Bandgrenzen eines weiteren noch zu durchsuchenden Frequenzbereiches, der die bestimmte Eigenresonanzfrequenz vorgibt, so daß die Phasenverschiebung zwischen dem Strom durch die Magneteinrichtung (3) des Schwingförderers (2) und der mechanischen Schwingung des Schwingförderers (2) an der unteren Bandgrenze in Bezug auf die der oberen Bandgrenze einen Unterschied von 180° aufweist, und daß das ermittelte Frequenzband in einzelnen Iterationsschritten in immer kleinere Abschnitte unterteilt wird, bis die Eigenresonanzfrequenz des Systems mit einer vorgegebenen Genauigkeit ermittelt ist, wobei in jedem Iterationsschritt festgestellt wird, ob die momentan eingestellte Frequenz oberhalb oder unterhalb der im weiteren Speicher (28) gespeicherten Eigenresonanzfrequenz liegt, und daß die genauere Eigensresonanzfrequenz in dem nichtflüchtigen Speicher (24) abgespeichert wird.

8. Steuereinrichtung nach Anspruch 7, dadurch gekennzeichnet, daß die Phasenverschiebung der unteren Bandgrenze und die Phasenverschiebung der oberen Bandgrenze in einem der Schaltung (29) zum Festlegen der Bandgrenzen, nachgeschalteten Phasenschalter (30) abgespeichert werden.

9. Steuereinrichtung nach Anspruch 8, dadurch gekennzeichnet, daß zur Ermittlung der Phasenverschiebung zwischen dem Strom durch die Magneteinrichtung (3) und der mechanischen Schwingung des Schwingförderers (2) das Ausgangssignal des Beschleunigungssensors (19) einer Schaltung (31) zur Vorzeichenerfassung, die ein dem Vorzeichen entsprechendes Ausgangssignal erzeugt, zugeführt wird, daß dieses Ausgangssignal einer Korrelationsschaltung (32) zugeführt wird, an die ferner die Rechteckimpulse des Rechteckgenerators (11) angelegt werden und die durch Multiplikation das Impuls/Pause-Verhältnis der Ergebnisfunktion ermittelt und an den Phasenschalter (30) anlegt, der aufgrund der in ihm für die obere und untere Bandgrenze gespeicherten Phasenverschiebungen ermittelt, ob die Ergebnisfunktion oberhalb oder unterhalb der Eigenresonanzfrequenz liegt und daß eine dem Phasenschalter (30) nachgeschaltete Ablaufsteuerung (40) die Weiterschaltung des Rechteckgenerators (11) auf die Frequenz des nachfolgenden Iterationsschrittes veranlaßt und bei der Ermittlung einer Phasenverschiebung von 90° die Messung beendet und die dann ermittelte Eigenresonanzfrequenz an den nichtflüchtigen Speicher (24) zur Abspeicherung gibt.

10. Steuereinrichtung nach Anspruch 9, dadurch gekennzeichnet, daß das Ausgangssignal der Korrelationsschaltung (32) in einer Bewertungsschaltung (33, 34, 35) im Hinblick auf seine Güte des Rauschens und/oder der Phasenlage und/oder der Amplitude bewertet wird.

11. Steuereinrichtung nach Anspruch 10, dadurch gekennzeichnet, daß der Bewertungsschaltung (33, 34, 35) eine Phasenmittelwertschaltung (36) nachgeschaltet ist, die in jedem Iterationsschritt aus mehreren Ausgangssignalen der Korrelationsschaltung (32) einen Phasenmittelwert bildet.

12. Steuereinrichtung nach einem der Ansprüche 1 bis 11, dadurch gekennzeichnet, daß der Sensor (19) ein Beschleunigungssensor ist und daß der Sollwert auf die gewünschte Fördergeschwindigkeit des Schwingförderers (2) eingestellt ist.

## Claims

1. A control unit for an oscillating conveyor (2) to be operated by a magnetic device (3) in intrinsic resonance having a power element (1) connected in front of the magnetic device (3) and having a sensor (19) detecting the oscillation of the oscillating conveyor (2), which sensor generates a signal corresponding to the oscillation of the oscillating conveyor (2) and supplies it to a control circuit (10) as an actual value and compares this with a set value for the oscillation predetermined by a default device (23), wherein the power element (1) controls the magnetic device (3) of the oscillating conveyor (2) in dependence on the deviation determined during the set value/actual value comparison, **characterised in that** to determine the intrinsic resonance frequency of the oscillating conveyor (2) during a first commissioning a frequency range, in which the resonance frequency is to be expected, is scanned and in so doing the frequency of the smallest power demand is determined thereby as the intrinsic resonance frequency of the oscillating conveyor (2),
**in that** for each frequency the difference between the set value and the actual value is determined and the frequency corresponding to the smallest difference is determined as the intrinsic resonance frequency and is stored in a non-volatile memory (24) for the subsequent operation of the oscillating conveyor (2).

2. A control unit according to Claim 1,
**characterised in that** the amplitude of the conveying velocity is used as the actual value.

3. A control unit according to Claim 1 or 2,
**characterised in that** the power element (1) comprises a semi-controlled bridge circuit and a filter capacitor (5) parallel thereto,
**in that** a first branch is connected parallel to the filter capacitor (5) and comprises a first control switch (6) and a first diode (7) connected in series thereto, in that a second branch is connected parallel to the filter capacitor (5) and comprises a second control switch (8) and a second diode (9) connected in series thereto,
**in that** the control circuit (10) comprises a square-wave generator (11), whose square-wave pulses produced in normal operation with the intrinsic resonance frequency are supplied to the gate terminal of the first control switch (6) directly and via a pulse duration modulator (16),
**and in that** the pulse duration modulator (16) changes the pulse duration of the square-wave pulses of the square-wave generator (11) in dependence on the difference determined by a controller (22).

4. A control unit according to Claim 3,
**characterised in that** between the pulse duration modulator (16) and the second control switch (8) a voltage-time-area control (18) is connected, to which a control signal incorporating the output voltage of the power part (1) is supplied from a voltage feedback (17), to obtain pulses of constant voltage-time-area at the magnetic device (3).

5. A control unit according to Claim 3 or 4,
**characterised in that** the signal of the acceleration sensor (19) is supplied to an amplitude recording device (20), which from the instantaneous value of the acceleration produces an output signal which corresponds to the maximum amplitude of the acceleration and is applied to an acceleration/velocity transducer (21), to which the square-wave pulses of the square-wave generator (11) are also supplied and which produces a signal corresponding to the amplitude of the acceleration as an actual value.

6. A control unit according to one of Claims 3 to 5,
**characterised in that** a sequence control (26) continuously altering the frequency of the square-wave generator (11) for scanning the frequency range is provided, after which a further memory (28) for the frequency of the smallest power demand is connected, which when scanning the frequency range records the output signals of the controller (22) and constantly compares them with one another, and thus determines the smallest power demand and stores the frequency associated therewith as the determined intrinsic resonance frequency.

7. A control unit according to Claim 6,
**characterised in that** after the further memory (28) for the determined intrinsic resonance frequency a circuit (29) for allocating band limits is connected, which for the more precise determination of the intrinsic resonance frequency of the oscillating conveyor (2) presets the band limits of a further frequency range still to be searched, which predetermines the determined intrinsic resonance frequency, so that the phase shift between the current by the magnetic device (3) of the oscillating conveyor (2) and the mechanical oscillation of the oscillating conveyor (2) has a difference of 180° at the lower band limit in relation to that of the upper band limit,
**and in that** the determined frequency band is divided into individual iteration steps in ever smaller sections, until the intrinsic resonance frequency of the system is determined with a predetermined precision, whereby in each iteration step it is established whether the currently set frequency lies above or below the intrinsic resonance frequency stored in the further memory (28),
**and in that** the more precise intrinsic resonance frequency is stored in the non-volatile memory (24).

8. A control unit according to Claim 7,
**characterised in that** the phase shift of the lower band limit and the phase shift of the upper band limit are stored in a phase keying circuit (30) connected after the circuit (29) for allocating the band limits.

9. A control unit according to Claim 8,
**characterised in that** to determine the phase shift between the current by the magnetic device (3) and the mechanical oscillation of the oscillating conveyor (2) the output signal of the acceleration sensor (19) is supplied to a circuit (31) for sign recording, which produces an output signal corresponding to the sign,
**in that** this output signal is supplied to a correlation circuit (32), to which the square-wave pulses of the square-wave generator (11) are also applied and which by multiplication determines the pulse/spacing ratio of the result function and applies it to the phase keying circuit (30), which on the basis of the phase shifts stored in it for the upper and lower band limit determines whether the result function lies above or below the intrinsic resonance frequency,
**and in that** a sequence control (40) connected after the phase keying circuit (30) prompts the further switching of the square-wave generator (11) to the frequency of the subsequent iteration step and when a phase shift of 90° is determined ends the measurement and passes the then determined intrinsic resonance frequency to the non-volatile memory (24) for storage.

10. A control unit according to Claim 9,
**characterised in that** the output signal of the correlation circuit (32) is evaluated in an evaluation circuit (33, 34, 35) with respect to the quality of the noise and/or the phase relationship and/or the amplitude.

11. A control unit according to Claim 10,
**characterised in that** a phase average circuit (36), which in each iteration step forms a phase average from several output signals of the correlation circuit (32), is connected after the evaluation circuit (33, 34, 35).

12. A control unit according to one of Claims 1 to 11,
**characterised in that** the sensor (19) is an acceleration sensor,
and in that the set value is set to the desired conveying velocity of the oscillating conveyor (2).

## Revendications

1. Dispositif de commande pour un transporteur à vibrations (2) destiné à fonctionner en régime de résonance propre sous l'action d'un dispositif magnétique (3), comprenant une partie de puissance (1) montée en amont du dispositif magnétique (3) et un capteur (19) qui détecte la vibration du transporteur à vibrations (2), qui produit un signal correspondant à la vibration du transporteur à vibrations (2), l'applique à un circuit de commande (10) en tant que valeur effective et compare cette dernière à une valeur de consigne pour la vibration, fournie par un dispositif de prédétermination (23), la partie de puissance (1) commandant le dispositif magnétique (3) du transporteur à vibrations (2) en fonction de l'écart déterminé par la comparaison valeur de consigne/ effective réelle, caractérisé par le fait qu'en vue de la détermination de la fréquence de résonance propre du transporteur à vibrations (2), lors d'une première mise en service, une plage de fréquence dans laquelle est censé se situer la fréquence de résonance est parcourue et la fréquence correspondant à la plus faible puissance absorbée est ainsi déterminée en tant que fréquence de résonance propre du transporteur à vibrations (2), que la différence entre la valeur de consigne et la valeur réelle est déterminée pour chaque fréquence et que la fréquence correspondant à la plus faible différence est définie en tant que fréquence de résonance propre et est mémorisée dans une mémoire non volatile (24) pour le fonctionnement subséquent du transporteur à vibrations (2).

2. Dispositif de commande suivant la revendication 1, caractérisé par le fait que l'amplitude de la vitesse de transport est utilisée comme valeur effective.

3. Dispositif de commande suivant la revendication 1 ou 2, caractérisé par le fait que la partie de puissance (1) comprend un pont semi-commandé et un condensateur de charge (5) parallèle avec ledit pont, qu'une première branche est montée en parallèle avec le condensateur de charge (5) et présente un premier interrupteur de commande (6) et une première diode (7) montée en série avec ledit interrupteur, qu'une deuxième branche est montée en parallèle avec le condensateur de charge (5) et comprend un deuxième interrupteur de commande (8) et une deuxième diode (9) montée en série avec cet interrupteur, que le circuit de commande (10) comprend un générateur d'impulsions rectangulaires (11) dont les impulsions rectangulaires produites en fonctionnement normal à la fréquence de résonance propre sont appliquées directement à la borne de commande du premier interrupteur de commande (6) en passant par un modulateur de largeur d'impulsions (16) à la borne de commande du deuxième interrupteur de commande (8) et que le modulateur de largeur d'impulsions (16) fait varier la largeur des impulsions rectangulaires du générateur d'impulsions rectangulaires (11) en fonction de la différence déterminée par un régulateur (22).

4. Dispositif de commande suivant la revendication 3, caractérisé par le fait qu'entre le modulateur de largeur d'impulsions (16) et le deuxième interrupteur de commande (8) est montée une commande d'aire tension-temps (18) à laquelle un signal de commande correspondant à la tension de sortie de la partie de puissance (1) est amené par un retour de tension (17) pour obtenir sur le dispositif magnétique (3) des impulsions ayant des aires tension-temps constantes.

5. Dispositif de commande suivant la revendication 3 ou 4, caractérisé par le fait que le signal du capteur d'accélération (19) est appliqué à un dispositif de détection d'amplitude (20) produisant à partir de la valeur momentanée de l'accélération un signal de sortie qui correspond à l'amplitude maximale de l'accélération et est appliqué à un convertisseur accélération/vitesse (21) qui reçoit également les impulsions rectangulaires du générateur d'impulsions rectangulaires (11) et produit un signal correspondant à l'amplitude de l'accélération, en tant que valeur effective.

6. Dispositif de commande suivant l'une des revendications 3 à 5, caractérisé par le fait qu'il est prévu une commande séquentielle (26) qui fait varier en continu la fréquence du générateur d'impulsions rectangulaires (11) en vue du balayage de la plage de fréquence et qui est suivie d'une mémoire supplémentaire (28) pour la mémorisation de la fréquence correspondant à la plus faible puissance absorbée, mémoire qui, lors du balayage de la plage de fréquence, reçoit les signaux de sortie du régulateur (22) et les compare en continu, et détermine ainsi la plus faible puissance absorbée et mémorise, en tant que fréquence de résonance propre définie, la fréquence associée à cette plus faible puissance absorbée.

7. Dispositif de commande suivant la revendication 6, caractérisé par le fait que la mémoire supplémentaire (28) pour la fréquence de résonance propre définie est suivie d'un circuit (29) de fixation de limites de bande qui, en vue de la détermination plus précise de la fréquence de résonance propre du transporteur à vibrations (2), détermine les limites de bande d'une autre plage de fréquence à balayer qui donne la fréquence de résonnance propre définie de sorte que le déphasage entre le courant traversant le dispositif magnétique (3) du transporteur à vibrations (2) et la vibration mécanique du transporteur à vibrations (2) présente, à la limite inférieure de bande, une différence de 180° par rapport à celui à la limite supérieure de bande, et que la bande de fréquences déterminée est subdivisée, selon des pas d'itération individuels, en sections de plus en plus petites jusqu'à ce que la fréquence de résonance propre du système soit déterminée avec une précision prédéfinie, avec détermination et dans chaque pas d'itération si la fréquence momentanément réglée est située au-dessus ou en dessous de la fréquence de résonance propre mémorisée dans la mémoire supplémentaire (28), et que la fréquence de résonance propre plus précise est mémorisée dans la mémoire non volatile (24).

8. Dispositif de commande suivant la revendication 7, caractérisé par le fait que le déphasage de la limite inférieure de bande et le déphasage de la limite supérieure de bande sont mémorisés dans un commutateur de phase (30) monté en aval du circuit (29) de fixation des limites de bande.

9. Dispositif de commande suivant la revendication 8, caractérisé par le fait qu'en vue de la détermination du déphasage entre le courant traversant le dispositif magnétique (3) et la vibration mécanique du transporteur à vibrations (2), le signal de sortie du capteur d'accélération (19) est appliqué à un circuit (31) de détermination de signe qui produit un signal de sortie correspondant au signe, que ce signal de sortie est appliqué à un circuit de corrélation qui reçoit en outre les impulsions rectangulaires du générateur d'impulsions rectangulaires (11) et qui, par multiplication, détermine le rapport impulsions/intervalles de la fonction résultat et l'applique au commutateur de phase (30), lequel, en fonction des déphasages mémorisés pour la limite supérieur de bande et la limite inférieure de bande, détermine si la fonction de résultat est située au-dessus ou en-dessous de la fréquence de résonance propre et qu'une commande séquentielle (40) montée en aval du commutateur de phase (30) provoque la commutation du générateur d'impulsions rectangulaires (11) sur la fréquence du pas d'itération suivant et, lors de la détermination d'un déphasage de 90°, arrête la mesure et transmet à la mémoire non volatile (24), en vue de la mémorisation, la fréquence de résonance propre ainsi définie.

10. Dispositif de commande suivant la revendication 9, caractérisé par le fait que le signal de sortie du circuit de corrélation (32) est évalué, dans un circuit d'évaluation (33, 34, 35) en ce qui concerne sa qualité du bruit, de la position de phase et/ou de l'amplitude.

11. Dispositif de commande suivant la revendication 10, caractérisé par le fait que le circuit d'évaluation (33, 34, 35) est suivi d'un circuit de valeur moyenne de phase qui forme une valeur moyenne de phase dans chaque pas d'itération à partir de plusieurs signaux de sortie du circuit de corrélation (32).

12. Dispositif de commande suivant l'une des revendications 1 à 11, caractérisé par le fait que le capteur (19) est un capteur d'accélération et que la valeur de consigne est réglée sur la vitesse de transport désirée du transporteur à vibrations (2).
